# EUROPÄISCHE PATENTANMELDUNG

(11) **EP 4 142 116 A1**
(43) Veröffentlichungstag der Anmeldung: **01.03.2023**
(21) Anmeldenummer: 21192750.4
(22) Anmeldetag: 24.08.2021
(51) Int. Cl.: H02K 3/52, H02K 5/18, H02K 5/20

(54) **DYNAMOELEKTRISCHE MASCHINE ALS ANTRIEB EINES ELEKTRISCH ANGETRIEBENEN FAHRZEUGS**

(71) Anmelder: Siemens Aktiengesellschaft, 80333 München (DE)
(72) Erfinder: Rudolph, Felix, 90491 Nürnberg (DE); Lang, Jonas, 92353 Postbauer-Heng (DE)

(57) **Zusammenfassung**

Die Erfindung betrifft eine dynamoelektrische Maschine (1) als Komponente eines Antriebs eines elektrisch angetriebenen Trucks oder Busses (15), wobei die dynamoelektrische Maschine (1) einen in einem Gehäuse (8) befindlichen Stator (2) aufweist, mit einem Wicklungssystem (3), das in Nuten angeordnet ist, die im Bereich eines Luftspaltes (14) liegen, wobei das Wicklungssystem (3) mehrphasig ausgeführt ist und an den Stirnseiten des Stators (2) Wickelköpfe (24) ausbildet, wobei die Leiter der elektrischen Phasen axial direkt an dem Wickelkopf (24) angeordnet sind und wobei ein Leiter eines Sternpunktes (7) dieses mehrphasigen Wicklungssystems (3) radial über den Wickelköpfen (24) zwischen Wickelkopf (24) und Gehäuse (8) vorgesehen ist.

## Beschreibung

Die Erfindung betrifft eine als auch einen Antrieb eines elektrisch angetriebenen Fahrzeugs, insbesondere eines Trucks oder Busses, als auch das elektrische Fahrzeug selbst.

Dynamoelektrische Maschine generieren aufgrund einer elektromagnetischen Wechselwirkung eines bestromten Wicklungssystems eines Stators mit einem Rotor ein Drehmoment, das u.a. zum Antrieb eines elektrischen Fahrzeugs angewandt wird.

Das mehrphasige Wicklungssystem weist Stränge auf, die jeweils Spulenanordnungen umfassen, die an einer Stirnseite des Stators eine Wickelkopf bilden, an den sich axial Schaltungsanordnungen des Wicklungssystem anschließen. Diese Position der Schaltungsanordnung trägt zusätzlich zur axialen Länge des Stators bei, was besonders bei elektrisch angetriebenen Fahrzeugen zu dementsprechenden Anpassungen und Einschränkungen im Fahrzeugdesign führen kann.

Diese Positionierung der Schaltanordnungen des Wicklungssystems in axialer Verlängerung des Wickelkopfes führt aufgrund der räumlichen Nähe unterschiedlicher Spannungspotentiale zu einem vergleichsweise hohen Isolationsaufwand, um die gewünschte Spannungsfestigkeit der gesamten Wicklungsanordnung zu erreichen, was wiederrum den notwendigen Bauraum vergrößert.

Als Isolationselemente zwischen Spulenleitern und einem geerdeten Blechpaket sind aus der JP 2010-263675 Kappen als Isolationselement eines Wicklungssystems bekannt.

Des Weiteren sind aus der US 2013-0193800 A1 Kappen für eine Zahnspule bekannt, die sich im Nutbereich dieser Zahnspulen axial überlappen.

Ausgehend davon liegt der Erfindung die Aufgabe zugrunde eine dynamoelektrische Maschine zu schaffen, die als Antrieb eines elektrisch angetriebenen Fahrzeugs geeignet und bauraumoptimiert ausgelegt ist. Als elektrisch angetriebene Fahrzeuge sollen dabei neben PKWs, Fahrzeuge mit Nutzlast, wie z.B. Trucks oder Busse verstanden werden.

Die Lösung der gestellten Aufgabe gelingt durch eine dynamoelektrische Maschine als Komponente eines Antriebs eines elektrisch angetriebenen Trucks oder Busses, wobei die dynamoelektrische Maschine einen in einem Gehäuse befindlichen Stator aufweist, mit einem Wicklungssystem, das in Nuten angeordnet ist, die im Bereich eines Luftspaltes liegen, wobei das Wicklungssystem mehrphasig ausgeführt ist und an den Stirnseiten des Stators Wickelköpfe ausbildet, wobei die Leiter der elektrischen Phasen axial direkt an dem Wickelkopf angeordnet sind und wobei ein Leiter eines Sternpunktes dieses mehrphasigen Wicklungssystems radial über den Wickelköpfen zwischen Wickelkopf und Gehäuse vorgesehen ist.

Das Wicklungssystem ist aus Spulen aufgebaut, wobei als Spulen eine Anzahl von Hin- und Rückleitern zu verstehen ist, die einen Zahn oder mehrere Zähne des Stators umfassen. Mit anderen Worten es handelt sich also um gesehnte Spulen, die eine Spulenweite von einigen Nutteilungen aufweisen oder Zahnspulen, die jeweils nur einen Zahn umfassen. Jede Spule weist mehrere Windungen auf, unabhängig davon, ob es sich um eine gesehnte Spule oder Zahnspulen handelt. Jede Spule hat einen Spuleneingang und ein Spulenausgang. Der Spuleneingang ist mit der jeweiligen Leistungszuführung - bei einer mehrphasigen Wicklungssystem beispielsweise mit der Phase L1, L2, oder L3 beaufschlagt, während der Spulenausgang mit einem Sternpunkt elektrisch leitend verbunden ist.

Der Sternpunkt umfasst somit alle Spulenausgänge des Wicklungssystems der dynamoelektrischen Maschine.

Es gibt also pro Wicklungssystem eines Motors einen Sternpunkt, der umfänglich verlaufend an der Stirnseite des Stators angeordnet ist.

Alternativ dazu kann der Sternpunkt auch in mehrere getrennte Sternpunkte ausgeführt sein. Dabei werden zum Beispiel drei benachbarte Spulenausgänge unterschiedlicher elektrischer Phasen zu einem Sternpunkt zusammengeführt. Es sind also in Umfangsrichtung betrachtet mehrere voneinander getrennte Sternpunkte vorhanden. Dies ermöglicht eine weitere Kompaktierung in der Bauweise eines Motors eines Trucks oder elektrisch angetriebenen Busses.

Um nunmehr auch die Isolationsanforderungen nachzukommen, die insbesondere an einen kompakten Aufbau einer dynamoelektrischen Maschine bei Commercial Vehicles zu stellen sind, wie bei elektrisch angetriebenen Trucks oder Bussen, werden in axialer Verlängerung eines Wickelkopfes des Wicklungssystems die Phasenleitungen umfänglich geführt, während der Sternpunkt radial oberhalb des Wickelkopfes zwischen Wickelkopf und Gehäuse umfänglich oder teilumfänglich geführt und fixiert ist.

Dies führt zu einem kompakteren Aufbau der dynamoelektrischen Maschine, da insbesondere der in Umfangsrichtung zumindest abschnittsweise geführte Sternpunkt nicht mehr gegen die Phasenleitungen dementsprechend isoliert werden muss.

Vorzugsweise wird die Verlegung des Sternpunkts bzw. des Sternpunktleiters und die an das Gesamtsystem gestellten Isolationsanforderungen erfindungsgemäß weiter verbessert, indem die Wickelköpfe Wickelkappen aufweisen, die u.a. die Führung der Phasenleiter, als auch des Sternpunktes übernehmen. Des Weiteren werden auch die Isolationsanforderungen zwischen den Phasenleitern und den andersphasigen Spulen und als auch zwischen den Phasenleitern und dem Sternpunkt erfüllt.

Die Wickelkappe weist des weiteren Mittel zur Führung von elektrischen Leitern des Wicklungssystems und/oder Phasenleitungen und/oder Sternpunktleitungen auf. Dies sind u.a. Führungsnuten, Ausnehmungen und/oder Berandungen, die ein Festzurren und ein Positionieren der jeweiligen Leiter erleichtern und verbessern, sodass ein kompakter Aufbau gewährleistet werden kann.

Da ein kompakter Aufbau einer dynamoelektrischen Maschine zu dementsprechenden thermischen Belastungen führen kann, weiß das Gehäuse radial außenliegende Kühlrippen oder in dem Gehäuse eingelagerte Kühlrohre auf, sodass entweder eine Luft oder Wasserkühlung realisiert werden kann.

Die Wasserkühlung ist vorzugsweise eine Wassermantelkühlung deren Kühlrohre in Umfangsrichtung wendelförmig geführt sind oder über den Umfang des Gehäuses verteilt mäandernd verlaufen.

Eine derartig kompakt ausgeführte dynamoelektrische Maschine eignet sich insbesondere für den Einbau in elektrisch angetriebenen Fahrzeugen, wie PKWs, elektrisch angetriebene Trucks oder Elektrobusse. Vor allem bei Trucks und Elektrobussen soll das Platzangebot für dementsprechende Ladung oder eine angestrebte Personenzahl maximiert werden, dies wird unter anderem dann erreicht, wenn die Antriebskomponenten möglichst kompakt ausgeführt sind, also ein möglichst geringes Volumen innerhalb des Fahrzeugs einnehmen.

Dabei kann jede Achse des Fahrzeugs durch einen oder zwei Motoren antreibbar sein.

Zwei Motoren an einer Antriebsachse können auch elektrisch gekoppelt sein, sodass eine elektrische Achse geschaffen wird, die dementsprechend ansteuerbar ist.

Die Erfindung sowie weitere vorteilhafte Ausgestaltungen der Erfindung werden anhand prinzipiell dargestellter Ausführungsbeispiele näher erläutert, darin zeigen:
- FIG 1: eine dynamoelektrische Maschine
- FIG 2: eine Detailansicht eines Wickelkopfes im Längsschnitt,
- FIG 3: eine Detailansicht eines Wickelkopfes im Querschnitt,
- FIG 4: eine Wickelkappe in perspektivischer Darstellung,
- FIG 5: eine Draufsicht auf die Wickelkappe,
- FIG 6: eine Seitenansicht der Wickelkappe,
- FIG 7: einen prinzipiell dargestellten elektrisch angetriebenen Bus,
- FIG 8,: einen Querschnitt durch die Antriebsachse des Busses

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 5 und damit auf die entsprechende Symmetrieachse des Stators 2. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte auch durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

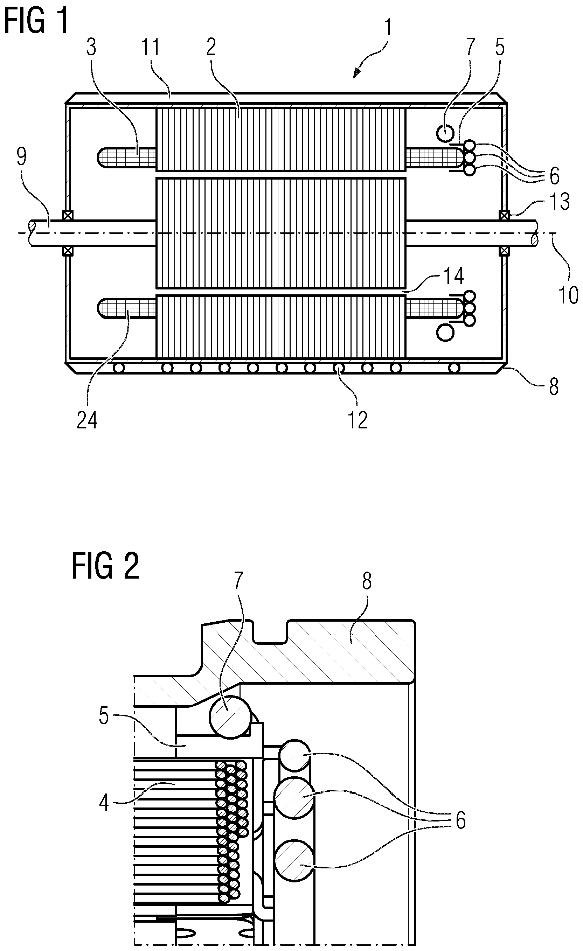

FIG 1 zeigt einen Längsschnitt einer dynamoelektrischen Maschine 1, die in einem Gehäuse 8 positioniert ist. Ein Stator 2, der in nicht näher dargestellten Nuten ein Wicklungssystem 3 aufweist, weist an seinen Stirnseiten jeweils einen Wickelkopf auf. Der Stator 2 ist thermisch an das Gehäuse 8 angebunden, wobei das Gehäuse 8, wie im oberen Teil des Längsschnitts dargestellt Kühlrippen 1 aufweist oder alternativ, wie im unteren Teil des Längsschnitts dargestellt eine wendelförmige Flüssigkeitskühlung aufweist, deren Wendelhöhe in Abhängigkeit von der anstehenden Wärmelast ausgeführt ist. Mit anderen Worten: im Bereich des Wickelkopfes 24 ist die Wendelhöhe geringer als im Bereich des Blechpakets.

Durch einen Luftspalt 14 vom Stator 2 beabstandet befindet sich ein Rotor, der drehfest mit einer Welle 9 verbunden ist und um eine Achse 10 drehbar gelagert ist. Die Lager 13 sind in Lagerschilden angeordnet, die im Gehäuse 8 fixiert sind. Es müssen nicht zwangsläufig auf beiden Seiten Lager 13 vorgesehen werden - es kann sich auch um einen fliegend gelagerten Rotor handeln.

FIG 2 zeigt in einer Detailansicht des Längsschnitts den Bereich des Wickelkopfes 24. Dabei ist zu sehen, dass die Phasenleitungen 6 an der Stirnseite des Wickelkopfes 24 axial angeordnet sind, indem sie radial übereinander verlaufen. Diese Phasenleitungen 6 führen die elektrische Energie zu dem mehrphasigen Wicklungssystem 3 in diesem Fall die Phasen L1, L2, L3. Bei diesem Wicklungssystem 3, im vorliegenden Fall handelt es sich um eine Zahnspulen 4 einer Phase, sodass um eine Isolationsfähigkeit zwischen den Phasenleitungen 6 zu erhalten, eine Wickelkappe 5 am Wickelkopf 24 vorgesehen ist, die zum einen die Phasenleitung 6 gegenüber der anders phasiger Zahnspule 4 isoliert, als auch zur Führung des Sternpunktes 7 dient. Der Sternpunktleiter 7 ist radial über dem Wickelkopf 24 zwischen Wickelkopf 24 und Gehäuse 8 auf der Wickelkappe 5 positioniert und ist somit gegen die Phasenleiter 6 und die Spulenleiter der Zahnspule 4 isoliert.

Der Sternpunktleiter 7 kann dabei umfänglich geführt sein. Er kann aber auch in mehrere umfänglich angeordnete separate Sternpunktleiterabschnitte unterteilt sein, die jeweils benachbarte Spulenausgänge unterschiedlicher Phasen zusammenführen.

Die Wickelkappe 5 ist ein Kunststoffteil das, wie später noch ausgeführt wird, Mittel aufweist, um die Phasenleitungen 6 bzw. den Sternpunktleiter 7 zu fixieren.

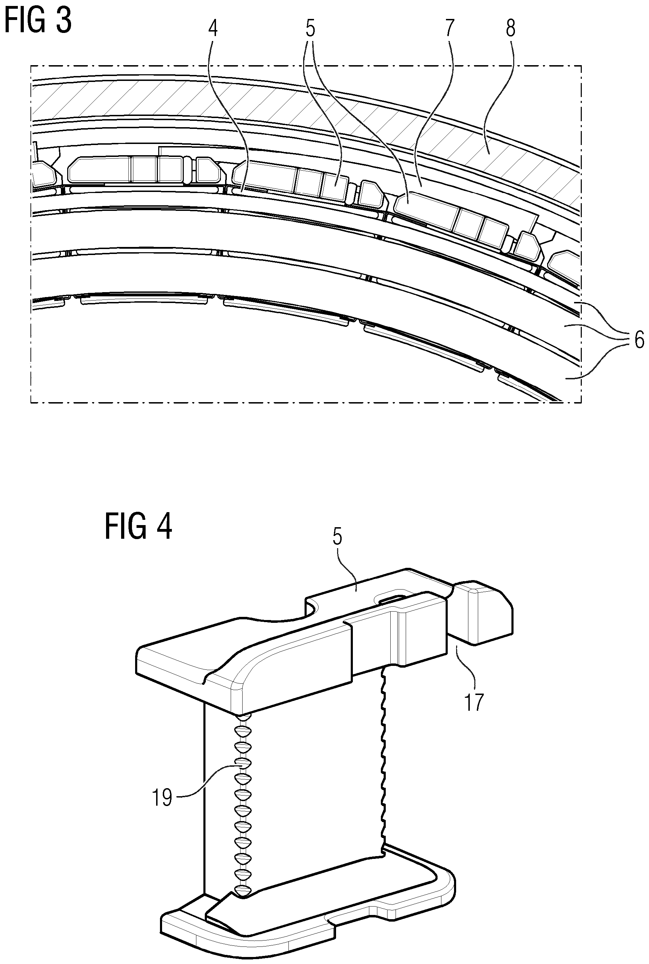

FIG 3 zeigt in einem Teilquerschnitt die Anordnung der Zahnspulen 4 und den Verlauf der Phasenleitungen 6, als auch die Anordnung des Sternpunktleiters 7. Diese Leiter sind in Umfangsrichtung betrachtet zumindest abschnittsweise entlang des Wickelkopfes 24 geführt.

In dieser Ausführung werden also die drei benachbarten Spulenausgänge miteinander verbunden.

Das Besondere dabei ist die Positionierung dieser Verbindung. Diese wird platzsparend radial hinter bzw. über den Spulen, genauer zwischen den Spulen 4 und dem Gehäuse 8, angeordnet. Es ergibt sich der Vorteil, dass die Sternpunktverschaltung somit nicht zur axialen Länge des Stators 2 beiträgt und dieser vergleichsweise axial kurz ausgeführt werden kann. Ein weiterer Vorteil ist die räumliche Distanz von Sternpunkt 7 und Phasenleitern 6. Je größer der Abstand vom Sternpunkt 7 zum Phaseneingang ist, desto besser sind die Isolationseigenschaften.

Daraus ergibt sich eine vergleichsweise kompakte Bauweise einer dynamoelektrischen Maschine 1, sowie eine verbesserte Spannungsfestigkeit durch die räumliche Trennung der Strangverschaltung - die auch auf dem Wickelkopf 24 stattfindet - und der Phaseneingänge.

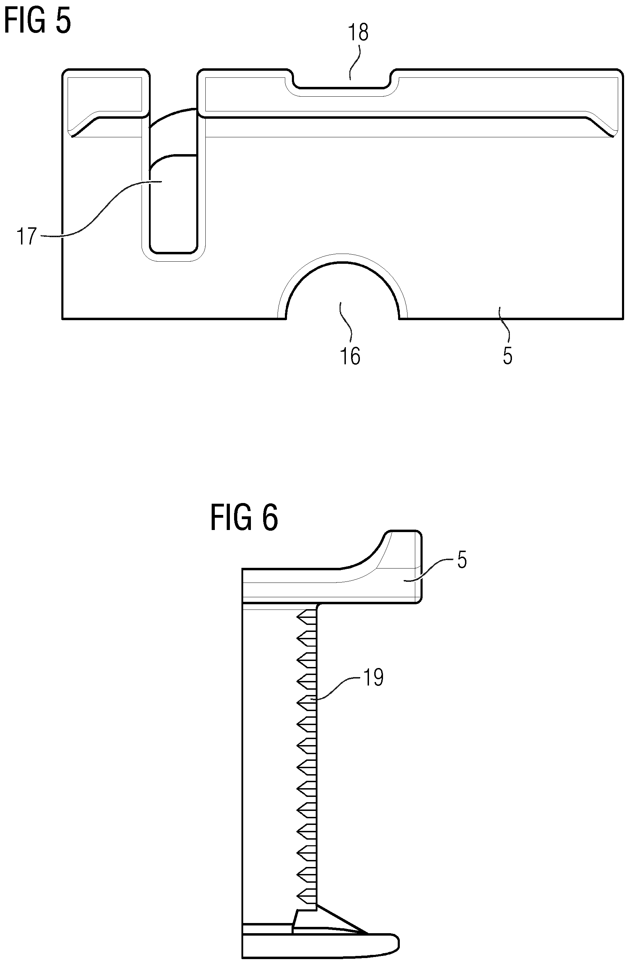

FIG 4 zeigt in einer perspektivischen Darstellung eine Wickelkappe 5 mit ihren Ausnehmungen 18, Riffelungen 19 und Öffnungen 17, die zur Fixierung, Halterung und Führung der Spulenleiter oder Sternpunktleiters 7 oder Fixierelementen, wie zum Beispiel Kabelbindern geeignet sind. FIG 5 zeigt diesen Durchbruch 16, der sich besonders zur Durchführung eines Bandes oder Kabelbinders eignet und zusammen mit der Ausnehmungen 18 den Sternpunktleiter 7 am Wickelkopf 24 bzw. der Wickelkappe 5 fixierbar gestaltet.

Ebenso können die Phasenleiter 6 mittels eines separaten Bandes oder Kabelbinders am Wickelkopf 24 oder der Wickelkappe 5 befestigt werden.

Alternativ dazu kann der oder die Sternpunktleiter 7 und die Phasenleiter 6 auch mittels eines gemeinsamen Bandes oder Kabelbinders am Wickelkopf 24 oder der Wickelkappe 5 befestigt werden.

Die Öffnung 17 ermöglicht einen einfachen und kurzen, induktivitätsarmen Anschluss eines Spulenausgangs zum Sternpunktleiter 7, der radial oberhalb des Wickelkopfes 24 verläuft.

FIG 6 zeigt in einer Seitenansicht die Wickelkappe 5 mit einer Riffelung 19, die u.a. zur Lagefixierung der einzelnen Spulenleiter besonders geeignet ist. Dies erhöht die Kompaktheit der Spulenleiter und führt somit zu einem erhöhten Nutfüllgrad der Leiter in den Nuten des Stators 2.

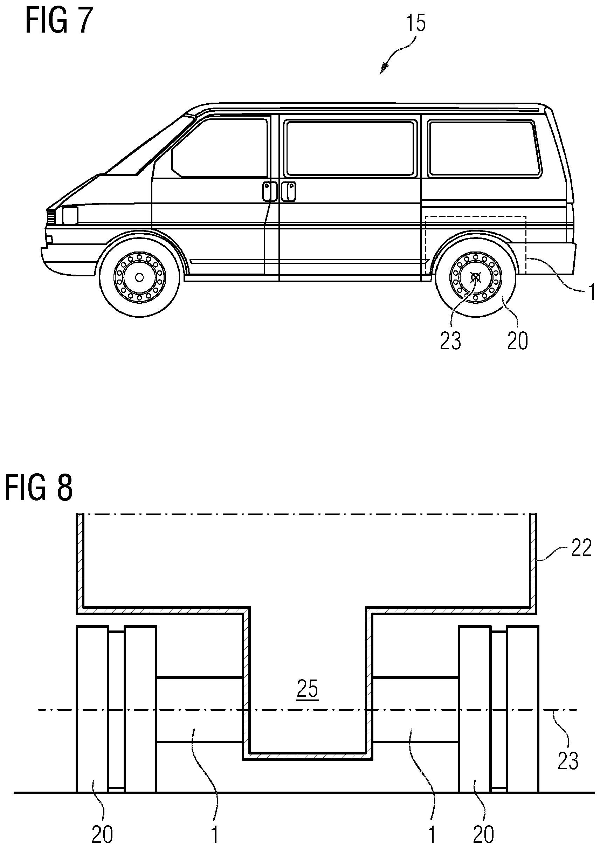

FIG 7 zeigt in einer prinzipiellen Darstellung die Anordnung einer derartigen dynamoelektrischen Maschine 1 als Antrieb eines elektrisch angetriebenen Busses 15. Dort ist vor allem eine Achse 23 angetrieben, und der Motor bzw. die dynamoelektrische Maschine 1 ist axial zwischen den Rädern 20 dieses Busses 15 vorgesehen.

FIG 8 zeigt in einem Querschnitt durch diese Antriebsachse 23, wie zwei Motoren 1 räumlich angeordnet sind, die elektrisch gekoppelt eine elektrische Achse bilden. Jeder der Motoren treibt dabei beispielhaft eine Zwillingsbereifung mit je zwei Rädern 20 an. Dies kann direkt oder über ein nachgeschaltetes Getriebe erfolgen. Entscheidend ist insbesondere bei Bussen 15, dass ein Durchgang 25 zwischen den Rädern 20 gewährleistet wird. Ob nunmehr die Motorachse 10 mit der Antriebsachse 23 axial fluchtet, kann für die Kompaktheit vorteilhaft sein, ist jedoch nicht erforderlich solange der Durchgang 25 gewährleistet ist.

Um die Isolationsfestigkeit zwischen Sternpunkt 7 bzw. Strangverschaltungen der Spulen einer Phase und den Phasenleitern 6 einzuhalten, können auch die Phasenleiter 6 radial auf dem Wickelkopf 24 angeordnet werden und der Sternpunkt 7 bzw. Strangverschaltungen der Spulen in axialer Verlängerung des Wickelkopfes 24.

## Patentansprüche

1. Dynamoelektrische Maschine (1) als Komponente eines Antriebs eines elektrisch angetriebenen Trucks oder Busses (15), wobei die dynamoelektrische Maschine (1) einen in einem Gehäuse (8) befindlichen Stator (2) aufweist, mit einem Wicklungssystem (3), das in Nuten angeordnet ist, die im Bereich eines Luftspaltes (14) liegen, wobei das Wicklungssystem (3) mehrphasig ausgeführt ist und an den Stirnseiten des Stators (2) Wickelköpfe (24) ausbildet, wobei die Leiter der elektrischen Phasen axial direkt an dem Wickelkopf (24) angeordnet sind und wobei ein Leiter eines Sternpunktes (7) dieses mehrphasigen Wicklungssystems (3) radial über den Wickelköpfen (24) zwischen Wickelkopf (24) und Gehäuse (8) vorgesehen ist.

2. Dynamoelektrische Maschine (1) nach Anspruch 1, **dadurch gekennzeichnet, dass** das Wicklungssystem (3) aus Zahnspulen (4) oder gesehnten Spulen aufgebaut ist, und die Wickelköpfe (24) jeweils mit einer Wickelkappe (5) versehen sind.

3. Dynamoelektrische Maschine (1) nach Anspruch 2, **dadurch gekennzeichnet, dass** die Wickelkappe (5) Mittel zur Führung von elektrischen Leitern des Wicklungssystems (3) und/oder Phasenleitungen (6) und/oder Sternpunktleitungen (7) aufweist.

4. Dynamoelektrische Maschine (1) nach einem der vorhergehenden Ansprüche, **dadurch gekennzeichnet , dass** das Gehäuse (8) Mittel zur Kühlung aufweist.

5. Dynamoelektrische Maschine (1) nach Anspruch 4, **dadurch gekennzeichnet, dass** das Gehäuse (8) axial verlaufende Rippen (11) aufweist.

6. Dynamoelektrische Maschine (1) nach Anspruch 4 oder 5, **dadurch gekennzeichnet, dass** das Gehäuse (8) als Wassermantelkühlung (12) ausgebildet ist.

7. Elektrisch angetriebener einachsiger oder mehrachsiger Bus (15) mit zumindest einer dynamoelektrische Maschine (1) nach einem der vorhergehenden Ansprüche, wobei zumindest eine Achse durch zumindest eine dynamoelektrische Maschine (1) antreibbar ist.
